# EUROPEAN PATENT SPECIFICATION

(11) **EP 1 108 158 B1**
(45) Date of publication and mention of the grant of the patent: **13.03.2002**
(21) Application number: 99928446.6
(22) Date of filing: 07.06.1999
(51) Int. Cl.: F16H 7/02, A01D 34/76

(54) **MOWER WITH BELT DRIVE SYSTEM**
MÄHER MIT RIEMENANTRIEB
FAUCHEUSE AVEC SYSTEME DE TRANSMISSION PAR COURROIE

(30) Priority: 28.08.1998 US 98215 P
(43) Date of publication of application: 20.06.2001
(73) Proprietor: MTD Products Inc., Cleveland, OH 44136-9722 (US)
(72) Inventor: BLENERT, Berhard, F-57200 Remelfing (FR)
(74) Representative: Freischem, Stephan, Dipl.-Ing.
(86) International application number: US9912748
(87) International publication number: WO0012914

(56) References cited:
- EP-A- 0 404 434
- CH-A- 569 896
- US-A- 1 658 344
- US-A- 3 774 464
- US-A- 4 440 537

## Description

### Technical Field

This invention pertains to the art of belt drive systems, and more particularly, to a belt drive system using a single belt that is axially twisted 180° at two locations for use with counter rotating twin blades in a mower deck.

### Background Art

Belt drive systems are well known in the art. It is also known for a belt drive system to utilize a belt that is twisted. However, it is generally the intent to eliminate the twisting of the belt, or at least to minimize such belt twisting. One known type of belt drive system is described in U.S. Patent No. 5,249,411 to Hake. Hake discloses a single belt drive system for a mower having a plurality of hinged mower sections. This belt system includes numerous pulleys, the pulleys not being in the same plane when any of the mower sections are pivoted. Thus, Hake's single belt is twisted when a mower section is raised or lowered relative to the rest of the mower. However, this belt twisting only occurs when a mower section is pivoted and it appears that the greatest amount of axial belt twisting is 90°. Disadvantages to the Hake belt system include the number of pulleys that are involved and the length of the belt that is needed. The numerous pulleys needed to gain the required wrap around the pulleys shorten belt life. Generally, the greater the number of pulleys in the system, the greater the weight of the mower, the greater the amount of friction the belt must endure and the greater the maintenance difficulties. Also, because of the set up of the pulley system described in the Hake patent, the belt needs to be a double-sided V-belt, or else the back side of the single-sided V-belt would be touching the pulleys.

Another type of belt drive system is described in U.S. Patent No. 4,429,515 to Davis Jr., et al. Davis, et al. disclose a self-propelled lawn mower with a series of pulleys to drive the engine and wheels. As in the Hake patent, the Davis belt drive system has a complicated series of pulleys, necessitating a very lengthy belt. The pulleys are not on the same plane and thus they require a twisted belt. As is commonly found in the art, however, Davis, Jr. et. al. attempt to minimize the belt twisting from 90° to 45°. The lengthy belt and numerous pulleys of the Davis' belt drive system create the same maintenance problems as the Hake belt drive system noted above.

Yet another type of belt drive system is described in U.S. Patent No. 4,925,437 to Suzuki, et al. Suzuki, et al disclose a belt tensioner device for a lawn mower. Like the previous mentioned patents, the Suzuki belt drive system contains a twisted belt on the belt drive system solely because the pulleys are not on the same plane. The extra tension placed on the belt is created by the angle of the pulleys with respect to one another.

Another type of belt drive system is described in U.S. Patent No. 4,231,215 to Klas. Klas discloses a single belt drive for a three spindle rotary mower. As in the previously discussed art the Klas belt drive system has a series of pulleys that are not on the same plane. The Klas system would have the same maintenance problems as the previous described belt drive systems. The Klas system also has the problem of requiring a double-sided V-belt as opposed to a single-sided V-belt. The Klas patent also talks about avoiding a twisted belt, and how this patent tries to move away from that. The Klas patent thus teaches that a twisted belt is not desired.

Still another type of belt drive system is described in U.S. Patent No. 3,774,464 to McCanse et al. McCanse et al. discloses a self-contained mower belt system for a mower according to the preamble of claim 1, that mounts to the back of a tractor. Yet again, the McCanse belt system uses a number of pulleys that are not on the same plane.

Another type of belt drive system is described in U.S. Patent No. 4,440,537 to Blattermann et al. Blattermann et al. discloses a conveyor belt system for a gantry. The belt segment, which is located on the leg of the gantry, can twist. This twist enables the conveyor belt to move in a forward and reverse direction for loading and unloading material. As in the McCanse et al. belt drive system, this twist does not correct any of the disadvantages previously discussed. The Blattermann patent only teaches that a conveyor belt may be twisted to enable forward and reverse direction of the belt.

The present invention contemplates a new and improved single belt drive system that is especially useful with counter rotating twin blades. Thus, the invention is simple in design, effective in use, and overcomes the foregoing difficulties and others while providing better and more advantageous overall results.

### Disclosure of the Invention

According to one aspect of this invention, a mower using an inventive belt drive system is provided. The mower includes a frame, an engine operatively mounted to the frame, and a mower deck operatively mounted to the frame. The mower deck has first and second mower blades positioned within. The belt drive system includes a drive pulley operatively connected to the engine, first and second driven pulleys operatively connected to the first and second mower blades respectively, an idler pulley, and a belt that operatively connects the drive pulley to the first and second driven pulleys and the idler pulley. The belt includes first and second axial twist areas of substantially 180° each.

According to another aspect of this invention, the belt has a degree of wrap of at least 120° for the drive pulley, the first and second driven pulleys and the idler pulley.

According to another aspect of this invention, the first and second driven pulleys are counter rotated by the belt drive system.

According to still another aspect of this invention, a method of assembling the belt drive system to a mower is provided. The belt is connected to the drive pulley, the first and second driven pulleys and the idler pulley such that the belt includes first and second axial twist areas of substantially 180° each. This method may include the step of wrapping the belt at least 120° around the drive pulley, the first and second driven pulleys and the idler pulley. Finally, the drive pulley may be rotated thereby rotating the first mower blade in a first direction and the second mower blade in a second direction.

One advantage of the present invention is the limited number of pulleys used as compared to similarly sized mowers known in the art.

Another advantage of the current invention is the length of belt required is greatly reduced from the related art.

A further advantage of the current invention is that the drive pulley and the first and second driven pulleys can all be aligned in the same plane, while still using a single-sided V-belt.

Yet another advantage of the current invention is that the necessary degree of wrap is maintained, while using a limited number of pulleys.

Still other benefits and advantages of the invention will become apparent to those skilled in the art upon a reading and understanding of the following detailed specification.

### Brief Description of the Drawings

The invention may take physical form in certain parts and arrangement of parts. A preferred embodiment of these parts will be described in detail in the specification and illustrated in the accompanying drawings, which form a part hereof and wherein:
FIGURE 1 is a side view of a mower equipped with the belt drive system of this invention.
FIGURE 2 is a plan view of the belt drive system showing the belt operatively connected to the drive pulley, the first and second driven pulleys and the idler pulley.
FIGURE 3 is a side view of a portion of the belt drive system showing the second driven pulley, idler pulley and belt.
FIGURE 4 is a cross-sectional view of the single-sided V-belt taken along the line 4-4 of FIGURE 2.
FIGURE 5 is a partial close-up view of the first axial twist area in the belt.
FIGURE 6 is a partial close-up view of the second axial twist area in the belt.

### Description of the Preferred Embodiment

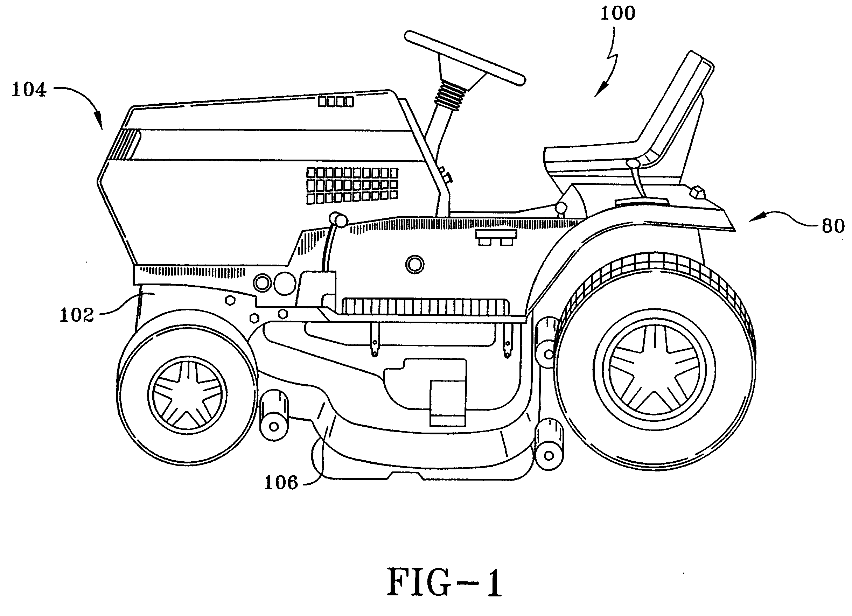

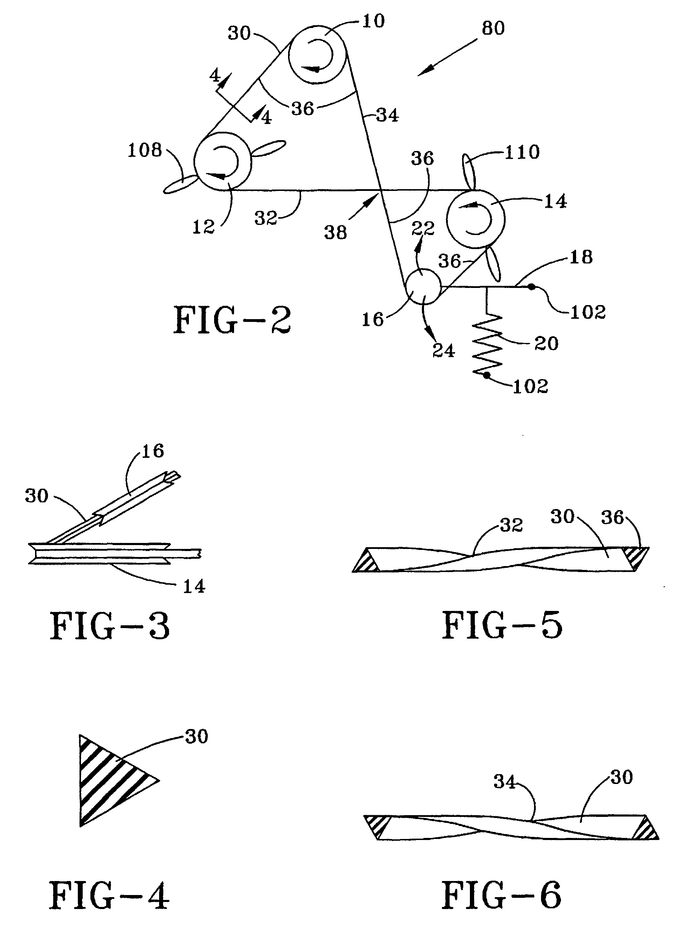

Referring now to the drawings, which are for purposes of illustrating a preferred embodiment of the invention only, and not for purposes of limiting the same, FIGURE 1 shows a mower 100 equipped with an inventive belt drive system 80. Although a riding lawn mower is shown, it is to be understood that the belt drive system 80 of this invention can be used with a walk-behind mower, other mowers, other vehicles and still other drive applications as well. The mower 100 has a frame 102 and an engine 104 operatively mounted to the frame 102. A mower deck 106 is also operatively mounted to the frame 102 and includes first and second mower blades 108, 110 (shown in representative form in FIGURE 2) for use in cutting vegetation.

With reference now to FIGURES 1-2, the belt drive system 80 includes a drive pulley 10 that is operatively connected to the engine 104 by any means known in the art. In this way, the engine 104 may selectively rotate the drive pulley 10. The belt drive system 80 also includes first and second driven pulleys 12, 14, an idler pulley 16, and a belt 30. In the preferred embodiment, the first and second driven pulleys 12, 14 are driven pulleys operatively connected to the first and second mower blades 108, 110 respectively. Thus, by rotating the first and second driven pulleys 12, 14, the mower blades 108, 110 can be rotated and the cutting of vegetation can be accomplished. It should be noted, however, that the first and second driven pulleys 12, 14 can be used to rotate any mower implement or other device chosen with sound engineering judgement.

With reference now to FIGURE 2, the idler pulley 16 is not essential for this invention but it is preferred as it provides an easy means for removing and/or replacing the belt 30 if desired. The idler pulley 16 is rotatably connected to an idler bracket 18 that is pivotably connected to the frame 102 as shown in representative form in FIGURE 2. A spring 20 is operatively connected to the idler bracket 18 and the frame 102 for use in biasing the idler pulley toward an engaged position 24. When in the engaged position 24, the idler pulley 16 holds the belt 30 taut into operative connection with the various pulleys 10, 12, 14, 16. The idler pulley 16 can be selectively moved into a disengaged position 22 where the belt 30 is loosened or slack and can be removed if desired.

With continuing reference to FIGURE 2, it is preferred that the belt 30 is a single-sided V-belt, but any belt type chosen with sound engineering judgement may be used. A V-belt gives the advantage of a closer fit with the various pulleys, and reduces slippage. FIGURE 2 shows the belt 30 wrapped around the drive pulley 10, the first and second driven pulleys 12, 14 and the idler pulley 16. It should be noted that the belt 30 has sufficient wrap around each of the pulleys 10, 12, 14, 16. The degree of wrap for each pulley can be any that is used according to sound engineering judgment but is preferably at least 120°. When the degree of wrap is less than 120° the chance for belt slippage is considered to high for this application.

With reference now to FIGURES 2-6 what is especially important about this invention is that the belt 30 includes first and second axial twist areas 32, 34. By axial twist it is meant that the twist is about or around the axis of the belt 30. Preferably the first and second axial twist areas 32, 34 are substantially 180° each. This permits an inner side 36 of the belt 30 to always be exposed toward the various pulleys. The use of the twist areas 32, 34 provide important advantages. For one thing, the number of pulleys can be reduced. It is well known in the art that when a single belt is used in a belt drive system, additional pulleys beyond the drive pulley, the driven pulleys and the idler pulley are required. These additional pulleys are necessary to provide the necessary degree of wrap for each of the pulleys. The belt drive system 80 of this invention provides a sufficient degree of wrap for each pulley without the use of additional pulleys. Such additional pulleys add weight and cost to the mower. Another advantage provided by the twist areas 32, 34 are related to the belt 30. For this invention, the overall length of the belt 30 can be minimized since there are no additional pulleys to wrap around. Also, this invention allows the belt 30 to be a single-sided belt. Thus, the belt cost can be significantly reduced.

Still referring to FIGURES 2-6, preferably the first axial twist area 32 is positioned between the first and second driven pulleys 12, 14 and the second axial twist area 34 is positioned between the drive pulley 10 and the idler pulley 16. Of course the axial twist areas 32, 34 could be alternately positioned. It is preferred that the axial twist areas 32, 34 occur where there is a relatively long section of belt 30 between pulleys. This minimizes twisting forces in the belt 30.

With continuing reference to FIGURES 2-6, a key advantage to this invention is that the driven pulleys 12, 14 can easily be counter rotated. By counter rotated it is meant that while the first driven pulley 12 is rotated in a first direction (clockwise as shown in FIGURE 2) the second driven pulley 14 is simultaneously rotated in a second direction (counter clockwise as shown in FIGURE 2). This counter rotation may be desirable, for example, for use with a lawn mower. This permits grass clippings (not shown) cut by the mower blades 108, 110 to be moved toward the center of the mower deck 106 (that is between the driven pulleys 12, 14) for subsequent discharge away from the mower deck 106.

With reference now to FIGURES 1-2, it should be noted that at least one of the pulleys 10, 12, 14, 16 must not be on the same plane as the others. If this were not true the belt 30 would contact or rub itself at location 38 shown in FIGURE 2. In the preferred embodiment, the drive pulley 10 and the first and second driven pulleys 12, 14 are positioned substantially along the same plane while the idler pulley 16 is positioned slightly above the plane of the other pulleys. It may also be desirable for the pulleys to be positioned such that their axes are not parallel. In other words, one or more of the pulleys may be tilted. In this embodiment, for example, the idler pulley is tilted as shown in FIGURE 3.

It should be noted that this invention works effectively with only three pulleys, the drive pulley 10, and the first and second driven pulleys 12, 14. The idler pulley 16 is preferred for the reasons discussed above. Of course in place of the idler pulley a third driven pulley (not shown) could also be used. In fact any number of pulleys chosen with sound engineering judgement can be used with this invention.

The invention has been described with reference to the preferred embodiment. Obviously, modifications and alterations will occur to others upon a reading and understanding of the specification. It is intended by applicant to include all such modifications and alterations in so far as they come within the scope of the appended claims.

## Claims

1. A mower (100) including a frame (102), an engine (104) operatively mounted to the frame (102), a mower deck (106) operatively mounted to the frame (102), first and second mower blades (108, 110) positioned within the mower deck (106), and a belt drive system (80), the belt drive system (80) including a drive pulley (10) operatively connected to the engine (104), first and second driven pulleys (12, 14) operatively connected to the first and second mower blades (108, 110) respectively, an idler pulley (16), and a belt (30) that operatively connects the drive pulley (10) to the first and second driven pulleys (12, 14) and the idler pulley (16), the mower being **characterized by**:
the drive pulley (10), the first driven pulley (12) and the second driven pulley (14) being positioned on substantially the same plane, and
the belt having first and second axial twists areas (32, 34) of substantially 180° each to maximize the degree of wrap on the first drive pulley (10), the first and second driven pulleys (12, 14) and the idler pulley (16).

2. The mower (100) of claim 1 wherein the belt has a degree of wrap of at least 120° for the drive pulley (10), the first and second driven pulleys (12, 14) and the idler pulley (16).

3. The mower (100) of claim 1 wherein at least one of the drive pulley (10), the first driven pulley (12), the second driven pulley (14), and the idler pulley (16) is tilted.

4. The mower (100) of claim 1 wherein the first axial twist area (32) is positioned between the first and second driven pulleys (12, 14) and the second axial twist area (34) is positioned between the drive pulley (10) and the idler pulley (16).

5. The mower (100) of claim 1 wherein the first and second driven pulleys (12, 14) are counter rotated.

6. The mower (100) of claim 1 wherein the belt (30) is a single sided V-belt having an inner side (36) and an outer side wherein the inner side (36) is V-shaped and the outer side is flat.

7. The mower (100) of claim 1 wherein an inner side (36) of the belt (30) is always exposed toward the drive pulley (10), the first driven pulley (12), the second driven pulley (14) and the idler pulley (16).

8. The mower (100) of claim 1 having only four pulleys wherein the four pulleys are the drive pulley (10), the first and second driven pulley (12, 14) and the idler pulley (16).

9. The mower (100) of claim 1 wherein a first portion of the belt is positioned above a second portion of the belt along a vertical line.

10. A method of assembling a belt drive system (80) to a mower (100), the method including the steps of providing a mower (100) with a frame (102), an engine (104) operatively mounted to the frame (102), and a mower deck (106) operatively mounted to the frame (102) having first and second mower blades (108, 110), providing a belt drive system (80) that includes a drive pulley (10) operatively connected to the engine (104), and first and second driven pulleys (12, 14) operatively connected to the first and second mower blades (108, 110) respectively, and an idler pulley (16), the method being **characterized by** the step of:
positioning the drive pulley (10), the first driven pulley (12) and the second driven pulley (14) on substantially the same plane, and
operatively connecting a belt to the drive pulley (10), the first and second driven pulleys (12, 14) and the idler pulley (16) such that the belt includes a first and second axial twist areas (32, 34) of substantially 180° each to maximize the degree of wrap on the first drive pulley (10), the first and second driven pulleys (12, 14) and the idler pulley (16).

11. The method of claim 10 wherein the step of operatively connecting a belt to the drive pulley (10), the first and second driven pulleys (12, 14) and the idler pulley (16) such that the belt includes a first and second axial twist areas (32, 34) of substantially 180° each to maximize the degree of wrap on the first drive pulley (10), the first and second driven pulleys (12, 14) and the idler pulley (16), comprises the step of:
wrapping the belt (30) at least 120° around the drive pulley (10), the first and second driven pulleys (12, 14) and the idler pulley (16).

12. The method of claim 10 further comprising the step of:
positioning the belt (30) such that the first axial twist area is between the first and second driven pulleys (12, 14) and the second axial twist area (34) is between the drive pulley (10) and the idler pulley (16).

13. The method of claim 10 further comprising the step of:
tilting the idler pulley (16) with respect to the plane on which the drive pulley (10), the first driven pulley (12) and the second driven pulley (14) are positioned.

14. The method of claim 10 further comprising the step of:
rotating the drive pulley (10) thereby rotating the first mower blade (108) in a first direction and the second mower blade in a second direction.

## Patentansprüche

1. Ein Mäher (100) enthaltend einen Rahmen (102), einen Motor (104), der wirkend an dem Rahmen (102) montiert ist, ein Mähergehäuse (106), das wirkend an dem Rahmen (102) montiert ist, erste und zweite Mähermesser (108, 110), die innerhalb des Mähergehäuses (106) positioniert sind, und ein Riemenantriebssystem (80) enthaltend eine Antriebsriemenscheibe (10), die wirkend mit dem Motor (104) verbunden ist, erste und zweite angetriebene Riemenscheiben (12, 14), die wirkend mit dem ersten bzw. zweiten Mähermesser (108, 110) verbunden sind, eine Leitrolle (16) und einen Riemen (30), der die Antriebsriemenscheibe (10) mit den ersten und zweiten angetriebenen Riemenscheiben (12, 14) sowie der Leitrolle (16) wirkend verbindet, wobei der Mäher **gekennzeichnet ist durch**:
die Antriebsriemenscheibe (10), die erste angetriebene Riemenscheibe (12) und die zweite angetriebene Riemenscheibe (14) sind im wesentlichen in derselben Ebene positioniert, und
der Riemen weist erste und zweite axiale Verdrehungsbereiche (32, 34) von im wesentlichen 180° auf, jeder zur Maximierung des Windungsgrades an der ersten Antriebsriemenscheibe (10), den ersten und zweiten angetriebenen Riemenscheiben (12, 14) und der Leitrolle (16).

2. Mäher (100) nach Anspruch 1, wobei der Riemen einen Windungsgrad von mindestens 120° für die Antriebsriemenscheibe (10), die ersten und zweiten angetriebenen Riemenscheiben (12, 14) und die Leitrolle (16) aufweist.

3. Mäher (100) nach Anspruch 1, wobei mindestens eine der Antriebsriemenscheibe (10), der ersten angetriebenen Riemenscheibe (12), der zweiten angetriebenen Riemenscheibe (14) und der Leitrolle (16) schräg gestellt ist.

4. Mäher (100) nach Anspruch 1, wobei der erste axiale Verdrehungsbereich (32) zwischen den ersten und zweiten angetriebenen Riemenscheiben (12, 14) positioniert ist und der zweite axiale Verdrehungsbereich (34) zwischen der Antriebsriemenscheibe (10) und der Leitrolle (16) positioniert ist.

5. Mäher (100) nach Anspruch 1, wobei die ersten und zweiten angetriebenen Riemenscheiben (12, 14) entgegengesetzt gedreht werden.

6. Mäher (100) nach Anspruch 1, wobei der Riemen (30) ein einseitiger V-Riemen ist, der eine Innenseite (36) und eine Außenseite aufweist, wobei die Innenseite (36) V-förmig und die Außenseite flach ist.

7. Mäher (100) nach Anspruch 1, wobei eine Innenseite (36) des Riemens (30) immer der Antriebsriemenscheibe (10), der ersten angetriebenen Riemenscheibe (12), der zweiten angetriebenen Riemenscheibe (14) und der Leitrolle (16) zugewandt ist.

8. Mäher (100) nach Anspruch 1, der nur vier Riemenscheiben aufweist, wobei die vier Riemenscheiben die Antriebsriemenscheibe (10), die erste und zweite angetriebene Riemenscheibe (12,14) und die Leitrolle (16) sind.

9. Mäher (100) nach Anspruch 1, wobei ein erster Teil des Riemens oberhalb eines zweiten Teils des Riemens entlang einer vertikalen Linie positioniert ist.

10. Verfahren zum Montieren eines Riemenantriebssystems (80) an einem Mäher (100), wobei das Verfahren die Schritte enthält Bereitstellen eines Mähers (100) mit einem Rahmen (102), einem Motor (104), der wirkend an dem Rahmen (102) montiert ist, und einem Mähergehäuse (106), das wirkend an dem Rahmen (102) montiert ist und das erste und zweite Mähermesser (108, 110) aufweist, Bereitstellen eines Riemenantriebssystems (80), das eine Antriebsriemenscheibe (10), die wirkend mit dem Motor (104) verbunden ist, und erste und zweite angetriebene Riemenscheiben (12, 14), die wirkend mit dem ersten bzw. zweiten Mähermesser (108,110) verbunden sind, und eine Leitrolle (16) enthält, wobei das Verfahren durch den Schritt gekennzeichnet ist:
Positionieren der Antriebsriemenscheibe (10), der ersten angetriebenen Riemenscheibe (12) und der zweiten angetriebenen Riemenscheibe (14) im wesentlichen in derselben Ebene, und
wirkendes Verbinden eines Riemens mit der Antriebsriemenscheibe (10), den ersten und zweiten angetriebenen Riemenscheiben (12, 14) und der Leitrolle (16), so daß der Riemen erste und zweite axiale Verdrehungsbereiche (32, 34) von im wesentlichen 180° enthält, wobei jeder zur Maximierung des Windungsgrades an der ersten Antriebsriemenscheibe (10), den ersten und zweiten angetriebenen Riemenscheiben (12, 14) und der Leitrolle (16) dient.

11. Verfahren nach Anspruch 10, wobei der Schritt des wirkenden Verbindens eines Riemens mit der Antriebsriemenscheibe (10), den ersten und zweiten angetriebenen Riemenscheiben (12, 14) und der Leitrolle (16), so daß der Riemen erste und zweite axiale Verdrehungsbereiche (32, 34) von im wesentlichen 180°, jeder zur Maximierung des Windungsgrades an der ersten Antriebsriemenscheibe (10), den ersten und zweiten angetriebenen Riemenscheiben (12,14) und der Leitrolle (16), enthält, den Schritt umfaßt:
Winden des Riemens (30) mindestens 120° um die Antriebsriemenscheibe (10), die ersten und zweiten angetriebenen Riemenscheiben (12, 14) und die Leitrolle (16).

12. Verfahren nach Anspruch 10, weiterhin umfassend den Schritt:
Positionieren des Riemens (30), so daß der erste axiale Verdrehungsbereich zwischen den ersten und zweiten angetriebenen Riemenscheiben (12, 14) angeordnet ist und daß der zweite axiale Verdrehungsbereich (34) zwischen der Antriebsriemenscheibe (10) und der Leitrolle (16) angeordnet ist.

13. Verfahren nach Anspruch 10, weiterhin umfassend den Schritt:
Kippen der Leitrolle (16) hinsichtlich der Ebene, in der die Antriebsriemenscheibe (10), die erste angetriebene Riemenscheibe (12) und die zweite angetriebene Riemenscheibe (14) positioniert sind.

14. Verfahren nach Anspruch 10, weiterhin umfassend den Schritt:
Drehen der Antriebsriemenscheibe (10), wobei das erste Mähermesser (108) in eine erste Richtung und das zweite Mähermesser in eine zweite Richtung gedreht wird.

## Revendications

1. Tondeuse (100) comportant un châssis (102), un moteur (104) monté de manière opérationnelle sur le châssis (102), un plateau de tondeuse (106) monté de manière opérationnelle sur le châssis (102), des première et seconde lames de tondeuse (108, 110) positionnées dans le plateau de tondeuse (106), et un système d'entraînement à courroie (80), le système d'entraînement à courroie (80) comportant une poulie d'entraînement (10) connectée de manière opérationnelle au moteur (104), des première et seconde poulies entraînées (12, 14) connectées de manière opérationnelle respectivement aux première et seconde lames de tondeuse (108, 110), une poulie folle (16), et une courroie (30) qui connecte de manière opérationnelle la poulie d'entraînement (10) aux première et seconde poulies entraînées (12, 14) et à la poulie folle (16), la tondeuse étant **caractérisée en ce que** :
la poulie d'entraînement (10), la première poulie entraînée (12) et la seconde poulie entraînée (14) sont positionnées sensiblement sur le même plan, et
la courroie a des première et seconde zones de torsion axiale (32, 34) sensiblement de 180° chacune pour maximiser le degré d'enroulement sur la poulie d'entraînement (10), les première et seconde poulies entraînées (12, 14) et la poulie folle (16).

2. Tondeuse (100) selon la revendication 1, dans laquelle la courroie a un degré d'enroulement d'au moins 120° pour la poulie d'entraînement (10), les première et seconde poulies entraînées (12, 14) et la poulie folle (16).

3. Tondeuse (100) selon la revendication 1, dans laquelle au moins une parmi la poulie d'entraînement (10), la première poulie entraînée (12), la seconde poulie entraînée (14) et la poulie folle (16) est inclinée.

4. Tondeuse (100) selon la revendication 1, dans laquelle la première zone de torsion axiale (32) est positionnée entre les première et seconde poulies entraînées (12, 14), et la seconde zone de torsion axiale (34) est positionnée entre la poulie d'entraînement (10) et la poulie folle (16).

5. Tondeuse (100) selon la revendication 1, dans laquelle les première et seconde poulies entraînées (12, 14) sont mises en rotation en sens contraire.

6. Tondeuse (100) selon la revendication 1, dans laquelle la courroie (30) est une courroie à côté en V unique ayant un côté intérieur (36) et un côté extérieur, le côté intérieur (36) étant en forme de V et le côté extérieur étant plat.

7. Tondeuse (100) selon la revendication 1, dans laquelle un côté intérieur (36) de la courroie (30) est toujours exposé vers la poulie d'entraînement (10), la première poulie entraînée (12), la seconde poulie entraînée (14) et la poulie folle (16).

8. Tondeuse (100) selon la revendication 1, ayant seulement quatre poulies, dans laquelle les quatre poulies sont la poulie d'entraînement (10), les première et seconde poulies entraînées (12, 14) et la poulie folle (16).

9. Tondeuse (100) selon la revendication 1, dans laquelle une première partie de la courroie est positionnée au-dessus d'une seconde partie de la courroie le long d'une ligne verticale.

10. Procédé d'assemblage d'un système d'entraînement à courroie (80) sur une tondeuse (100), le procédé comportant les étapes consistant à munir une tondeuse (100) d'un châssis (102), d'un moteur (104) monté de manière opérationnelle sur le châssis (102), et d'un plateau de tondeuse (106) monté de manière opérationnelle sur le châssis (102) en ayant des première et seconde lames de tondeuse (108, 110), à fournir un système d'entraînement à courroie (80) qui comporte une poulie d'entraînement (10) connectée de manière opérationnelle au moteur (104), des première et seconde poulies entraînées (12, 14) connectées de manière opérationnelle respectivement aux première et seconde lames de tondeuse (108, 110), et une poulie folle (16), le procédé étant **caractérisé en ce qu'**il comporte les étapes consistant à :
positionner la poulie d'entraînement (10), la première poulie entraînée (12) et la seconde poulie entraînée (14) sensiblement sur le même plan, et
connecter de manière opérationnelle une courroie à la poulie d'entraînement (10), aux première et seconde poulies entraînées (12, 14) et à la poulie folle (16), de telle sorte que la courroie comporte des première et seconde zones de torsion axiale (32, 34) sensiblement de 180° chacune pour maximiser le degré d'enroulement sur la première poulie d'entraînement (10), les première et seconde poulies entraînées (12, 14) et la poulie folle (16).

11. Procédé selon la revendication 10, dans lequel l'étape consistant à connecter de manière opérationnelle une courroie à la poulie d'entraînement (10), aux première et seconde poulies entraînées (12, 14) et à la poulie folle (16), de telle sorte que la courroie comporte des première et seconde zones de torsion axiale (32, 34) sensiblement de 180° chacune pour maximiser le degré d'enroulement sur la première poulie d'entraînement (10), les première et seconde poulies entraînées (12, 14) et la poulie folle (16), comporte l'étape consistant à :
enrouler la courroie (30) au moins sur 120° autour de la poulie d'entraînement (10), des première et seconde poulies entraînées (12, 14) et de la poulie folle (16).

12. Procédé selon la revendication 10, comportant de plus l'étape consistant à :
positionner la courroie (30) de telle sorte que la première zone de torsion axiale est située entre les première et seconde poulies entraînées (12, 14), et la seconde zone de torsion axiale (34) est située entre la poulie d'entraînement (10) et la poulie folle (16).

13. Procédé selon la revendication 10, comportant de plus l'étape consistant à :
incliner la poulie folle (16) par rapport au plan sur lequel sont positionnées la poulie d'entraînement (10), la première poulie entraînée (12) et la seconde poulie entraînée (14).

14. Procédé selon la revendication 10, comportant de plus l'étape consistant à :
mettre en rotation la poulie d'entraînement (10), en mettant ainsi en rotation la première lame de tondeuse (108) dans une première direction, et la seconde lame de tondeuse dans une seconde direction.
